# EUROPEAN PATENT APPLICATION

(11) **EP 1 808 745 A2**
(43) Date of publication of application: **18.07.2007**
(21) Application number: 06020311.4
(22) Date of filing: 27.09.2006
(51) Int. Cl.: G06F 3/023

(54) **Electronic device**

(30) Priority: 17.01.2006 JP 2006008496
(71) Applicant: MURATA KIKAI KABUSHIKI KAISHA, Kyoto (JP)
(72) Inventor: Kotani, Masaki, Fushimi-ku Kyoto 612-8686 (JP)
(74) Representative: Kirschner, Klaus Dieter

(57) **Abstract**

An electronic device includes an entry unit, a registering function accepting unit, and a function registering unit. The entry unit includes software keys registered with functions of the electronic device. The registering function accepting unit accepts a function selection instruction from a user. The function registering unit registers a function with the software keys. The software keys include an unregistered software key in which a function is not registered. The function registering unit registers the function accepted by the registering function accepting unit with the unregistered software key.

## Description

The present invention relates to an electronic device including an entry unit having software keys. Further, the software keys are keys registered with a function according to a scene, and a user operates a software key to activate the function registered with the operated software key.

Recently, one electronic device is prone to include a large number of functions. Under such a circumstance, it is desirable for a user to easily call a desired function from the large number of functions of the electronic device. Thus, the following technique has been proposed.

For example, according to one conventional electronic device, a function is selected by operating a key. In such an electronic device, various functions of the electronic device are associated with key information. When a key is selected, a function associated with the selected key is called.

According to another conventional electronic device, only a frequently used function is set as an executable function. Accordingly, the frequently used function can be executed by an easy operation.

Another conventional electronic device includes software keys in order to improve user-friendliness. For example, when a device includes a fax function and a copy function, under a scene in which a copy function is used with respect to a same software key, a function relating to a copy operation (for example, a function for adjusting a copy density) is assigned to such software key, and under a scene in which a fax function is used with respect to a same software key, a function relating to a fax communication (for example, a redial function) is assigned to such a software key. Accordingly, a large number of functions may be handled by a small number of keys, and a necessary function can be called by a simple operation.

In the conventional electronic device, a function to be registered with a software key is previously registered (i.e., at a shipment from a factory). Therefore, only a function that is frequently used in general is registered as a software key in many cases.

However, how an electronic device is used differs for each user. Accordingly, a frequently-used function also differs for each user. As a result, for some users, a frequently-used function is not registered as a software key, and the software key cannot be used efficiently.

In order to overcome the problems described above, preferred embodiments of the present invention provide an electronic device in which a user can efficiently use software keys.

Preferred embodiments of the present invention substantially guarantee an efficient use of the software keys.

According to an aspect of the present invention, an electronic device includes an entry unit, a function registering unit, and a registering function accepting unit. The entry unit includes software keys registered with functions of the electronic device. The function registering unit registers a function with a software key. The registering function accepting unit accepts a function selection instruction from a user. The entry unit includes an unregistered software key in which a function is not registered. The function registering unit registers the function accepted by the registering function accepting unit with the unregistered software key.

The electronic device also includes an unregistered software key generating unit which generates a new unregistered software key. When the function registering unit registers a function with an existing unregistered software key, the unregistered software key generating unit generates a new software key as an unregistered software key.

The electronic device also includes a function display control unit which displays a function registered with the software key on such a software key. The function display control unit does not display a function on the unregistered software key.

The unregistered software key is arranged at the end of an arrangement of the software keys of the entry unit.

The entry unit includes a function registration execution instruction entry key for entering an instruction for executing a registration of a function to the unregistered software key. When the user operates the function registration execution instruction entry key, the function registering unit registers a function with the unregistered software key.

According to an aspect of the present invention, the function registration execution instruction entry key is the unregistered software key.

The electronic device also includes a function list display control unit, a function selection accepting unit, a function activating unit, and a display item deleting unit. The function list display control unit selectably displays on a display unit, a list of functions of the electronic device, which are not registered with the software keys. The function selection accepting unit accepts a selection of a function from the list of the selectably displayed functions. The function activating unit activates the function accepted by the function selection accepting unit. When the function registering unit registers a function with the unregistered software key, the display item deleting unit deletes the registered function from the list of the functions.

According to another aspect of the present invention, an electronic device includes an entry unit, a function registering unit, a software key generating unit, and a registering function accepting unit. The entry unit includes software keys registered with functions of the electronic device. The function registering unit registers a function with a software key. The software key generating unit generates a new software key. The registering function accepting unit accepts a function selection instruction from a user. When the software key generating unit generates the new software key, the function registering unit registers the function accepted by the registering function accepting unit with the new software key.

The entry unit includes a software key generation instruction entry key for entering an instruction for generating the new software key. When the user operates the software key generation instruction entry key, the software key generating unit generates the new software key.

According to an aspect of the present invention, the software key generation instruction entry key is the software key.

The electronic device also includes a function display control unit which displays a function registered with a software key on such a software key. The function display control unit does not display a function on the software key generation instruction entry key.

The software key generation instruction entry key is arranged at the end of an arrangement of the software keys of the entry unit.

The electronic device also includes a function list display control unit, a function selection accepting unit, a function activating unit, and a display item deleting unit. The function list display control unit selectably displays on a display unit, a list of functions of the electronic device, which are not registered with the software keys. The function selection accepting unit accepts a selection of one of the functions from the list of selectably displayed functions. The function activating unit activates the function accepted by the function selection accepting unit. When the function registering unit registers a function with the new software key, the display item deleting unit deletes the registered function from the functions displayed in the list.

According to the present invention, a desired function of a user is registered with a software key. Accordingly, the user can flexibly carry out the registration of a function with respect to the software keys. As a result, the user can efficiently use the software keys.

According to the present invention, when a function is registered with an existing unregistered software key, a new software key is generated as an unregistered software key. That is, a desired function of the user can always be registered. Accordingly, all of the desired functions of the user can be registered with the software keys. As a result, the user can fully utilize the software keys.

According to the present invention, since a function is not displayed on the unregistered software key, the user can learn that such a software key is an unregistered software key.

According to the present invention, since the unregistered software key is arranged at the end of the arrangement of the software keys, an operation of the software keys excluding the unregistered software key is not hindered by the unregistered software key. As a result, the unregistered software key can be provided without hindering the user-friendliness of the software keys.

According to the present invention, since the electronic device includes a key for registering a function with respect to the unregistered software key, the user can register a function with respect to the unregistered software key by a simple operation. That is, the efficient use of the software keys can be substantially guaranteed.

According to the present invention, when the function registering unit registers a function with the unregistered software key, the registered function is deleted from the list of the functions. The function, which has been registered with the software key, is deleted from the list of the selectable functions. That is, a function is not activated redundantly, and the user-friendliness of the electronic device is improved.

According to the present invention, since the electronic device includes a key for entering an instruction to generate a new software key, the user can generate a new software key by a simple operation. That is, the user can easily generate a software key registered with a desired function of the user. Accordingly, the efficient use of the software keys can be substantially guaranteed.

According to the present invention, by operating the software key generation instruction entry key, i.e., the software key on which a function is not displayed, the user can generate a software key registered with a desired function. That is, since "blank" indicates a function registered with such a software key (i.e., a function for generating a software key to be registered with a desired function), the user can easily learn a function registered with the software key.

According to the present invention, since the software key generation instruction entry key is arranged at the end of the arrangement of the software keys, an operation of the software keys other than the software key generation instruction entry key is not hindered by the software key generation instruction entry key. As a result, the software key generation instruction entry key can be provided without degrading the user-friendliness of the software keys.

According to the present invention, when the function registering unit registers a function with respect to a new software key, the registered function is deleted from the list of the functions. Accordingly, the function which has been registered with the software key is deleted from the selectable functions. That is, since a function is not activated redundantly, the user-friendliness of the electronic device is improved even further.

Other features, elements, processes, steps, characteristics and advantages of the present invention will become more apparent from the following detailed description of preferred embodiments of the present invention with reference to the attached drawings.

Fig. 1 is a block diagram illustrating a configuration of a digital Multi Function Peripheral (MFP) according to a first preferred embodiment of the present invention.

Fig. 2 illustrates an example of a configuration of a display unit and a portion of an operation unit.

Fig. 3 is a flowchart illustrating a process operation carried out when setting a software key.

Fig. 4 is a flowchart illustrating a setting process operation of a software key on a copy standby screen.

Fig. 5 is a flowchart illustrating a process operation carried out when registering a function and changing a registered function with respect to a software key on the copy standby screen.

Fig. 6 is a flowchart illustrating a process operation carried out when deleting a software key on the copy standby screen.

Fig. 7A illustrates an example of a configuration of the copy standby screen, and Fig. 7B illustrates an example of a configuration of a copy menu screen.

Fig. 8A illustrates an example of a configuration of a device setting screen, Fig. 8B illustrates an example of a configuration of a device management screen, Fig. 8C illustrates an example of a configuration of a standby screen selection screen, and Fig. 8D illustrates an example of a configuration of a setting content selection screen.

Fig. 9A illustrates an example of a configuration of a key selection screen, and Fig. 9B illustrates an example of a configuration of a registering function selection screen.

Fig. 10A and Fig. 10B respectively illustrate an example of a configuration of a copy standby screen and a copy menu screen when a new software key registered with a desired function of a user is generated.

Fig. 11A and Fig. 11B respectively illustrate an example of a configuration of a copy standby screen and a copy menu screen when a changing process of a registered function is executed.

Fig. 12A and Fig. 12B respectively illustrate an example of a configuration of a copy standby screen and a copy menu screen when a deletion process of a software key is executed.

Fig. 13 is a flowchart illustrating a process operation carried out when registering a function and changing a registered function with respect to a software key on the copy standby screen.

Fig. 14 illustrates an example of a configuration of a display unit and a portion of an operation unit.

Fig. 15 illustrates a first example of a function for generating a new software key.

Fig. 16 illustrates a second example of a function for generating a new software key.

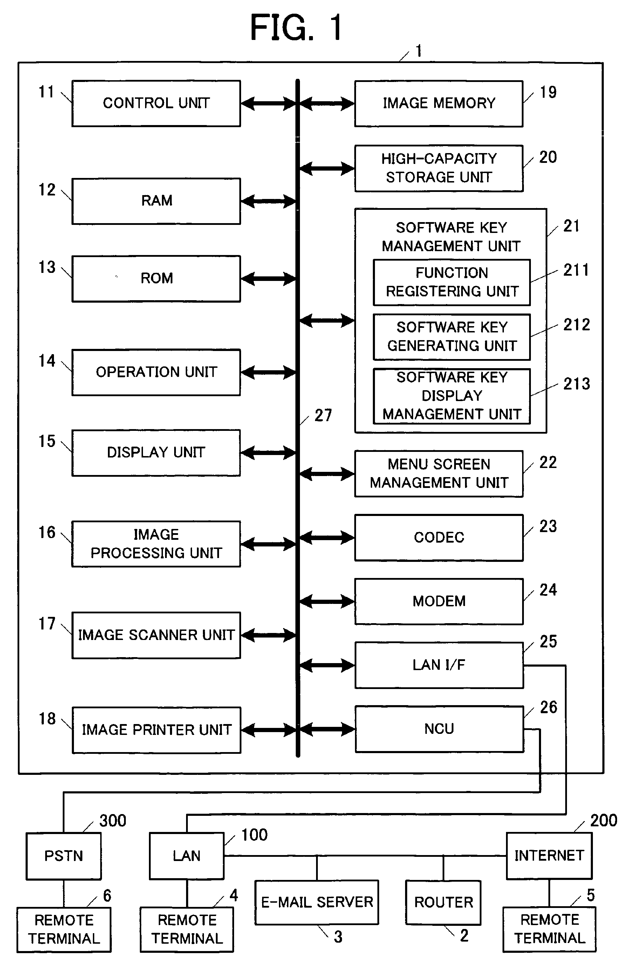

(1. Digital MFP) Fig. 1 is a block diagram illustrating a configuration of a digital MFP 1 as an electronic device embedded with a function according to a first preferred embodiment of the present invention.

The digital MFP 1 includes a plurality of functions such as a fax function, a copy function, a scanner function, and a printer function.

The digital MFP 1 includes a control unit 11, a Random Access Memory (RAM) 12, a Read Only Memory (ROM) 13, an operation unit 14, a display unit 15, an image processing unit 16, an image scanner unit 17, an image printer unit 18, an image memory 19, a high-capacity storage unit 20, a software key management unit 21, a menu screen management unit 22, and function units 23 through 26 related to communication, which are electrically connected to one another via a bus line 27.

The control unit 11 includes a Central Processing Unit (CPU). The control unit 11 controls each of the above hardware components in accordance with a program stored in the ROM 13 to realize various functions of the digital MFP 1.

The RAM 12 is a readable and writable storage device. The RAM 12 temporarily stores various data, such as image data, a fax number and an e-mail address, and also data that generates when a computation process is executed by the control unit 11. The RAM 12 includes a Static RAM (SRAM), a flash memory, or the like.

The ROM 13 is a read-only storage device, which previously stores a program and data necessary for controlling the digital MFP 1.

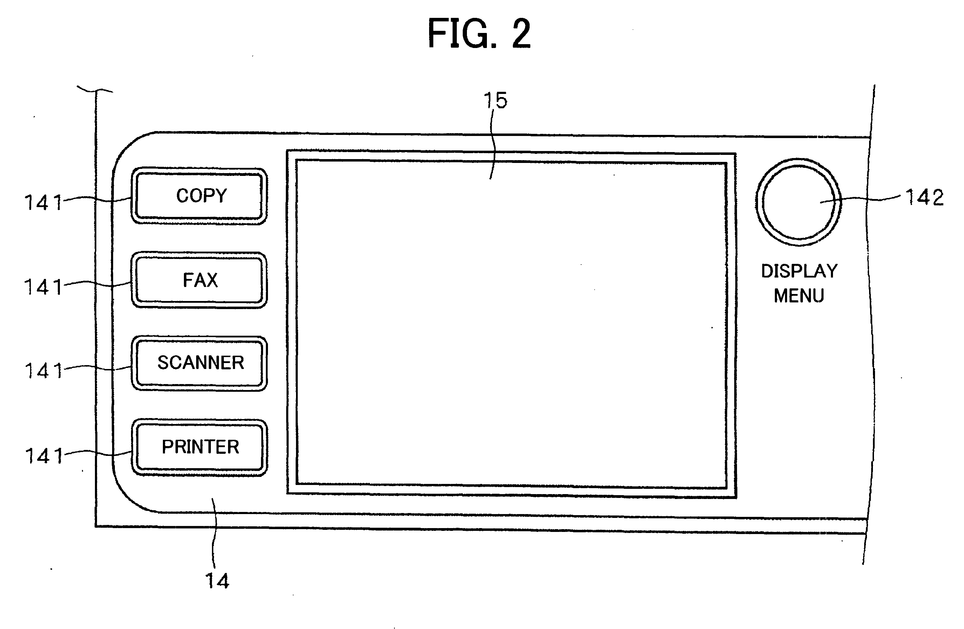

The operation unit 14 includes various keys such as a character key, a ten-key numeric pad, and a function key. The operation unit 14 accepts an operation performed by the user, such as an entry of a command and text data. The user operation accepted by the operation unit 14 is input to the control unit 11 as a signal. The control unit 11 controls an operation of each components of the digital MFP 1 in accordance with the user operation. In particular, the operation unit 14 includes function switching keys 141 for switching a display of a standby screen, and a menu key 142 for displaying a menu screen (refer to Fig. 2).

The display unit 15 displays an operation status of the digital MFP 1 and image data or the like. For example, the display unit 15 is a Liquid Crystal Display (LCD). A touch-screen is arranged on a display screen of the display unit 15, and the display unit 15 also functions as the operation unit 14. For example, the touch-screen realizes a software key assigned with a prescribed function on a standby screen display, and accepts the user operation such as an instruction for activating a prescribed function. Further, various keys on the operation unit 14 may be realized by the touch-screen arranged on the display screen of the display unit 15. In the same manner, various keys realized by the touch-screen may be provided as hardware keys on the operation unit 14.

The image processing unit 16 executes various processes on received image data and image data acquired from the image scanner unit 17. For example, the image processing unit 16 executes an Analog-to-Digital (A/D) conversion, a conversion of a color specification system, a color adjustment, and an image synthesis.

The image scanner unit 17 is a scanner which scans an image of an original document by a scanning element such as a Charge-Coupled Device (CCD) line sensor. The image scanner unit 17 may be a scanner of which a scanning element scans a surface of an original document placed on a glass platen to read an image on the original document. Alternatively, the image scanner unit 17 may be a scanner of which an original document placed on a document placing table (not illustrated) is fed by an Auto Document Feeder (ADF) and a standstill scanning element scans the surface of the fed original document to read an image on the original document.

The image printer unit 18 is a printer which prints image data or the like stored in the image memory 19 onto printing paper. For example, the image printer unit 18 may be an electrophotographic printer.

The image memory 19 temporarily stores image data received from a remote terminal 4, 5, or 6 via a Local Area Network InterFace (LAN I/F) 25 or a Network Control Unit (NCU) 26, image data scanned by the image scanner unit 17, or image data processed by the image processing unit 16. The image memory 19 is a readable and writable memory such as a Dynamic RAM (DRAM).

The high-capacity storage unit 20 includes a hard disk. The high-capacity storage unit 20 stores image data processed by the image scanner unit 17.

The software key management unit 21 is a function unit for carrying out a management of a software key realized by the touch-screen provided on the display screen of the display unit 15. The software key management unit 21 includes a function registering unit 211, which registers a function with a software key and changes a registered function, and a software key generating unit 212, which newly generates a software key for registering a function.

The function registering unit 211 is a function unit for registering a function with a software key, and for changing a registered function, or the like.

When a function to be registered with a software key by the function registering unit 211 is designated, the software key generating unit 212 generates a new software key registered with the designated function.

The software key display management unit 213 is a function unit for displaying within a software key, a name and a setting status of a function registered with such a software key.

The menu screen management unit 22 is a function unit for carrying out a management of a menu screen. In particular, the menu screen management unit 22 carries out various processes such as generating and deleting of a function listed in the menu screen.

As the function units related to the communication in the digital MFP 1, a Coder-Decoder (CODEC) 23, a Modulator-Demodulator (MODEM) 24, the LAN I/F 25, and the NCU 26 are electrically connected via the bus line 27. The CODEC 23 encodes and decodes image data or the like according to a plurality of protocols. The MODEM 24 modulates and demodulates transmission data and received data. The LAN I/F 25 is an interface between the digital MFP 1 and a LAN 100. The NCU 26 controls to make and break a telephone line.

Next, a description will be made of a communication environment of the digital MFP 1. The digital MFP 1 is connected to the LAN 100. An e-mail server 3 and a remote terminal 4 or the like are connected to the LAN 100. The LAN 100 is connected to the Internet 200 via a router 2 or the like. Accordingly, the digital MFP 1 can carry out an e-mail communication or the like with the remote terminal 4 connected via the LAN 100, and the remote terminal 5 connected via the Internet 200. The digital MFP 1 is also connected to a Public Switched Telephone Network (PSTN) 300, which is a data communication network for an analog communication line. Accordingly, the digital MFP 1 can carry out a communication with the remote terminal 6 connected via the PSTN 300. For example, the remote terminals 4, 5, and 6 are a personal computer connected via a MODEM, a device similar to the digital MFP 1, a fixed-line telephone, a mobile telephone, a fax machine, or the like.

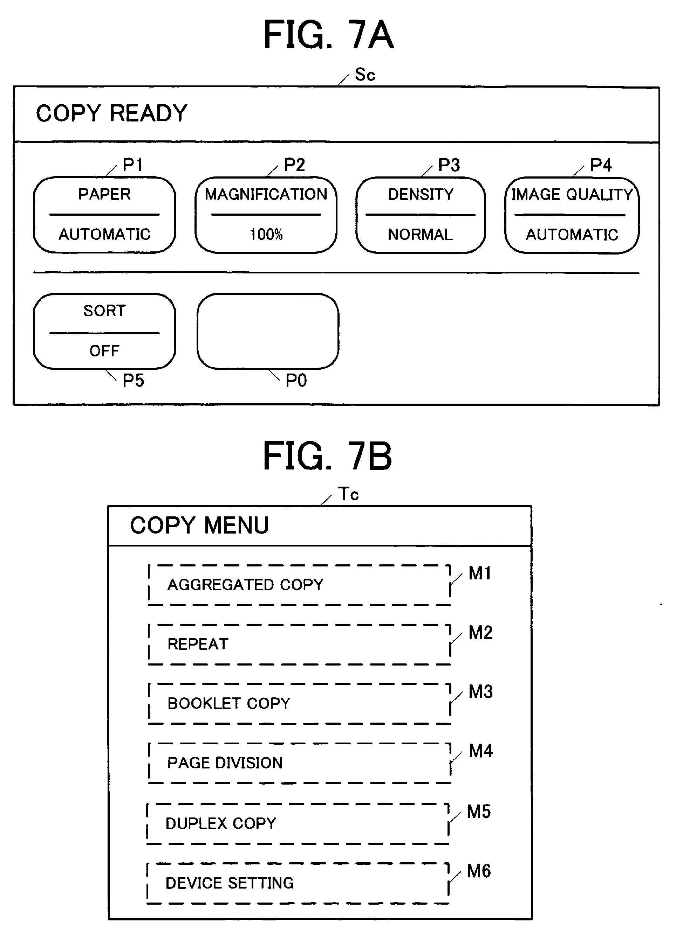

(2. Standby Screen and Menu Screen) Fig. 2 illustrates an example of a configuration of the display unit 15 and a portion of the operation unit 14 in the digital MFP 1. Fig. 7 through Fig. 12 illustrate examples of a configuration of screens displayed on the display unit 15.

The operation unit 14 includes four function switching keys 141, and one menu key 142.

The function switching keys 141 are keys for switching a standby screen display. The function switching keys 141 are associated with a "COPY" function, a "FAX" function, a "SCANNER" function, and a "PRINTER" function of the digital MFP 1. When one of the function switching keys 141 is pressed, a standby screen of a function associated with the pressed function switching key 141 (i.e., a function displayed within the function switching key 141) is displayed on the display unit 15. For example, when the user presses the function switching key 141 indicated as "COPY", the display unit 15 displays a copy standby screen Sc as illustrated in Fig. 7A. In the same manner, when the user presses the function switching key 141 indicated as "FAX", the display unit 15 displays a fax standby screen (not illustrated). A similar description applies to other function switching keys 141.

The menu key 142 is a key for displaying a menu screen. For example, under a state in which the copy standby screen Sc is displayed on the display unit 15, when the user presses the menu key 142, the display unit 15 displays a copy menu screen Ts as illustrated in Fig. 7B. Under a state in which the fax standby screen is displayed, when the user presses the menu key 142, a fax menu screen (not illustrated) is displayed.

(Standby Screen) With reference to Fig. 7A, a description will be made of the copy standby screen Sc. The copy standby screen Sc displays a plurality of software keys P0 through P5 realized by the touch-screen. Further, in the following, unless each of the software keys P0 through P5 is explicitly distinguished, the software keys P0 through P5 will be simply referred to as the "software key P". Further, although a total of six software keys P is displayed in Fig. 7A, a total number of the software keys P is not limited to six. A new software key P may be generated by a process described hereinafter, or a generated software key P may be deleted. That is, a total number of the software keys P may be changed.

(Software Keys) The software keys P0 through P5 are entry keys for calling a function registered with the software keys P0 through P5, respectively. Each of the software keys P0 through P5 indicates a name and a setting status of the function registered with each of the software keys P0 through P5, respectively. For example, in Fig. 7A, "MAGNIFICATION/100%" is displayed within the key of the software key P2. This indicates that a copy magnification setting function is registered with the software key P2, and that a copy magnification is set at 100%.

The software key P0 is a blank software key, and none of the above displays are made within the software key P0. The software key P0 is always displayed at the end of the arrangement of a series of the software keys arranged in the standby screen.

When one of the software keys P0 through P5 is pressed, a function registered with the pressed software key is called. For example, when the software key P2 is pressed, the process proceeds onto a setting process for setting a copy magnification, and a magnification of a copy image is set according to an operation performed by the user. Specifically, when the user operates the software key P2, the display unit 15 displays a screen for setting a magnification of the copy image. Next, when the user enters a desired magnification value (for example, 80%) by operating the ten-key numeric pad or the like according to the displayed screen, the entered value is set as the copy magnification. In this case, "MAGNIFICATION/80%" is displayed within the software key P2 in the copy standby screen Sc. That is, by pressing each of the software keys P1 through P5, various copy conditions can be set. Further, the copy conditions include a selection of copy paper, a setting of a copy magnification, a setting of a copy density, a selection of an image quality, and a setting of a sorting function. In accordance with the display within a software key, a current setting status can be confirmed.

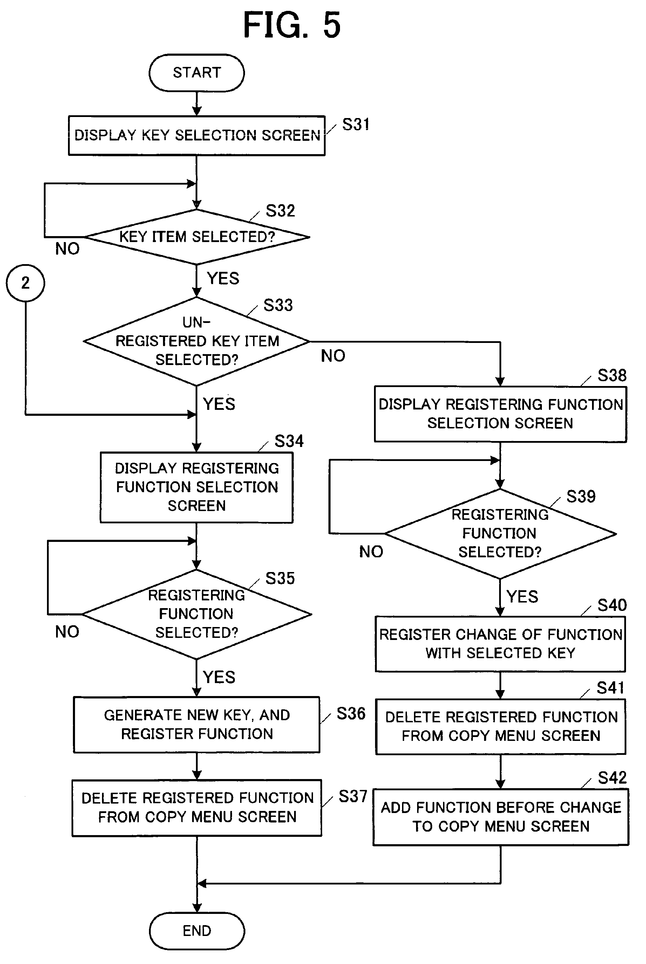

Meanwhile, when the software key P0 is pressed, a function for generating a new software key registered with a desired function of a user is activated, and a process is executed for generating a new software key registered with the desired function of the user on the copy standby screen Sc. More specifically, when the user presses the software key P0, in response to the pressing operation, a process is started for generating a new software key registered with the desired function of the user (a process of step S34 and onward of Fig. 5).

Further, the software keys P are keys which can be operated to enter a function assigned according to a scene (i.e., keys which can offer a function according to a scene to the user). For example, the software key P2 functions as a key for offering a "copy magnification setting function" to the user in the copy standby screen Sc, and as a key for offering, for example, a "redial function" in the fax standby screen.

Further, with regard to the software key P0, a similar function is assigned in various standby screens (i.e., a function for generating a new software key registered with a desired function of the user). The software key P0 in the copy standby screen Sc is registered with a function for generating a new software key registered with a desired function of the user in the copy standby screen Sc. The software key P0 in the fax standby screen is registered with a function for generating a new software key registered with a desired function of the user in the fax standby screen. A similar description applies to the software key P0 in other standby screens.

(Menu Screen) As illustrated in Fig. 7B, the copy menu screen Tc displays a list of prescribed functions relating to a copy process. In the following, each item of the listed functions will be referred to as "function display items M1 through M6". In the following, unless it is explicitly stated to distinguish each of the items, the items will be simply referred to as a "function display item M". Further, in the following, a description will be made of the copy menu screen Tc. Other menu screens including the fax menu screen also have a similar configuration as the copy menu screen Tc.

Among functions relating primarily to the copy process among various functions of the digital MFP 1, functions excluding the functions registered with the software keys P of the copy standby screen Sc are displayed as the function display items M on the copy menu screen Tc. Therefore, a total number of the displayed function display items M depends on a total number of the functions of the digital MFP 1 and a total number of the software keys P. For example, when the digital MFP 1 includes a duplex copy function and the duplex copy function is not registered with any one of the software keys P of the copy standby screen Sc, the copy menu screen Tc displays the function display item M5 displayed as "DUPLEX COPY".

The copy menu screen Tc also functions as a selection screen for selecting a function. That is, the user can operate the ten-key numeric pad or the like to select any one of the function display items M1 through M6 listed in the copy menu screen Tc, and operate a prescribed execution key (not illustrated) for activating a function displayed within one of the function display items M1 through M6 selected by the user. For example, when the user selects the function display item M5 displayed as "DUPLEX COPY" and presses the execution key, the user can activate the duplex copy function.

(3. Setting Process of Software Key) In the digital MFP 1 embedded with a function corresponding to a first preferred embodiment of the present invention, various settings are carried out according to an operation performed by the user with respect to the software key P in each standby screen.

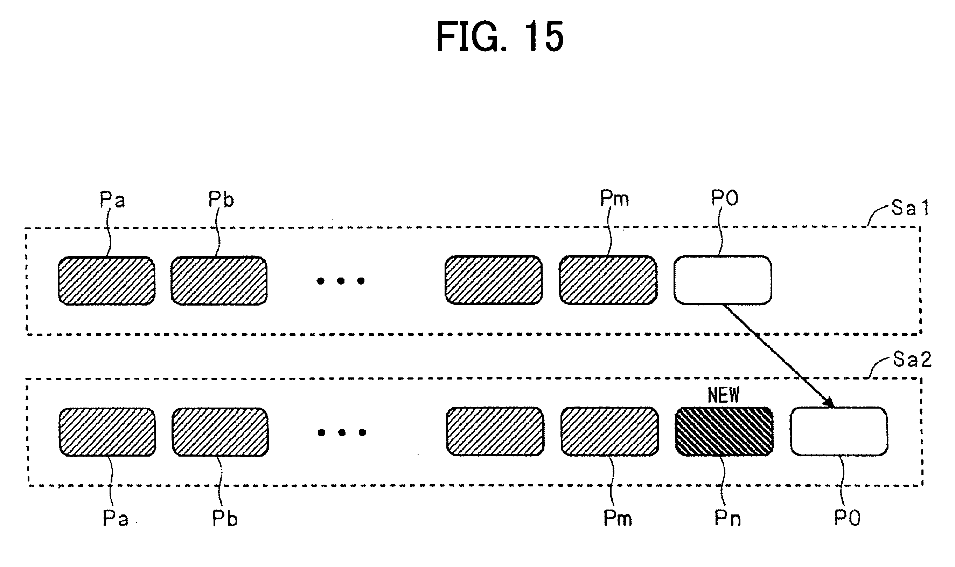

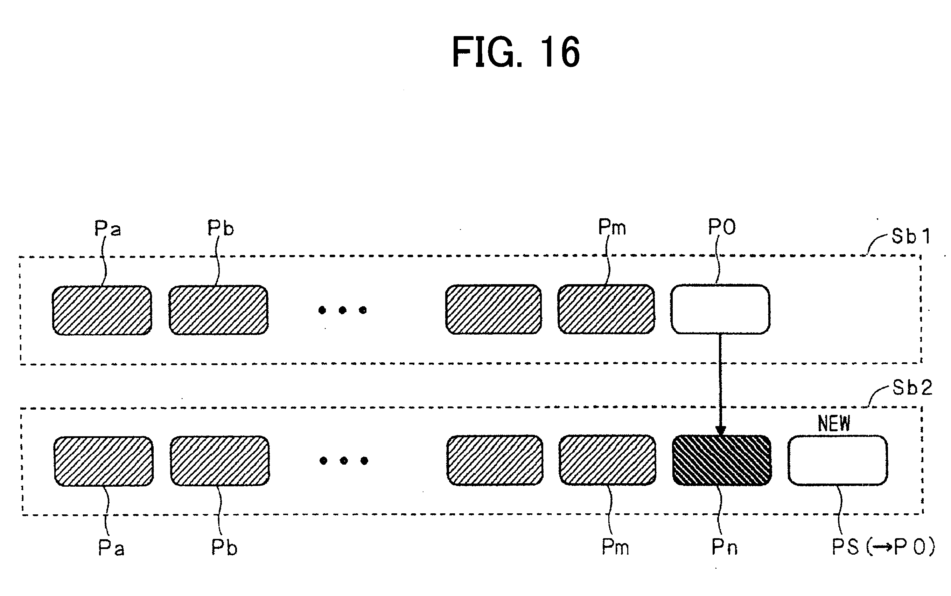

In the following, a description will be made of a setting process operation of the software key P. As described hereinafter, the digital MFP 1 of the present preferred embodiment includes a function for generating a new software key in response to a prescribed operation performed by the user. Such a function can be expressed from two aspects. Fig. 15 and Fig. 16 describe such a circumstance. Hatched software keys Pa through Pm are already assigned with a function, and correspond to the software keys P1 through P5 in the example illustrated in Fig. 7A. The blank software key P0 is an unregistered software key. A key labeled "NEW" is a newly generated software key.

According to a first aspect, when a new software key function is added under a state of a software key arrangement Sa1 (Fig. 15), as illustrated in a software key arrangement Sa2 (Fig. 15), a new software key Pn registered with such a function is generated so as to interrupt into the front of the unregistered software key P0, and the unregistered software key P0 moves to the end of the software key arrangement Sa2.

Meanwhile, according to a second aspect, when the user newly registers a function with the unregistered key P0 included in a software key arrangement Sb1 (Fig. 16), as illustrated in a software key arrangement Sb2 (Fig. 16), the unregistered key P0 changes to a software key Pn having a registered function. In addition, a new unregistered software key PS is generated at the end of the software key arrangement Sb2, and the unregistered software key PS occupies the same position as the original unregistered software key P0.

According to both of the two aspects, a change in the software key arrangement viewed from the user is substantially the same, and the two aspects have an ideologically common feature. In the following, a preferred embodiment of the present invention will be described from the first aspect. As another example of the preferred embodiment (3-3. Another Example of Setting Process Operation of Software Key), the present preferred embodiment will be described from the second aspect.

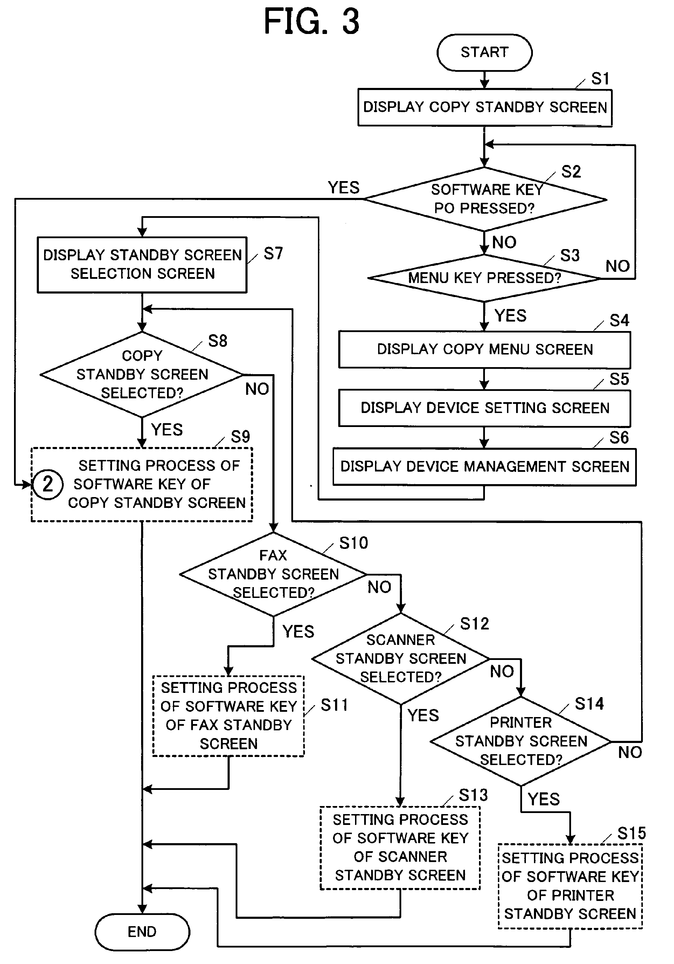

(3-1. Outline of Process) Fig. 3 is a flowchart illustrating a process operation carried out when carrying out a setting of the software key P in the digital MFP 1. Unless it is explicitly stated in the following description, the following operation is carried out automatically under the control of the control unit 11.

First, under a state in which the copy standby screen Sc (Fig. 7A) is displayed on the display unit 15 (step S1), a determination is carried out as to whether or not the software key P0 has been pressed (step S2). Further, a description will be made of an example in which a process is carried out under a state in which the copy standby screen Sc is displayed. However, a similar process can be executed when another standby screen is displayed.

When a determination is made at step S2 that the software key P0 has been pressed, the process proceeds onto step S9. (More specifically, the process proceeds onto step S34 (refer to Fig. 5) among a series of processes of step S9. The series of the processes executed as step S9 will be described later in detail.)

When a determination is made at step S2 that the software key P0 has not been pressed, a determination is carried out as to whether or not the menu key 141 has been pressed (step S3).

When a determination is made at step S3 that the menu key 141 has been pressed, the display unit 15 displays the copy menu screen Tc (Fig. 7B) (step S4). Meanwhile, when a determination is made at step S3 that the menu key 141 has not been pressed, the process returns to step S2.

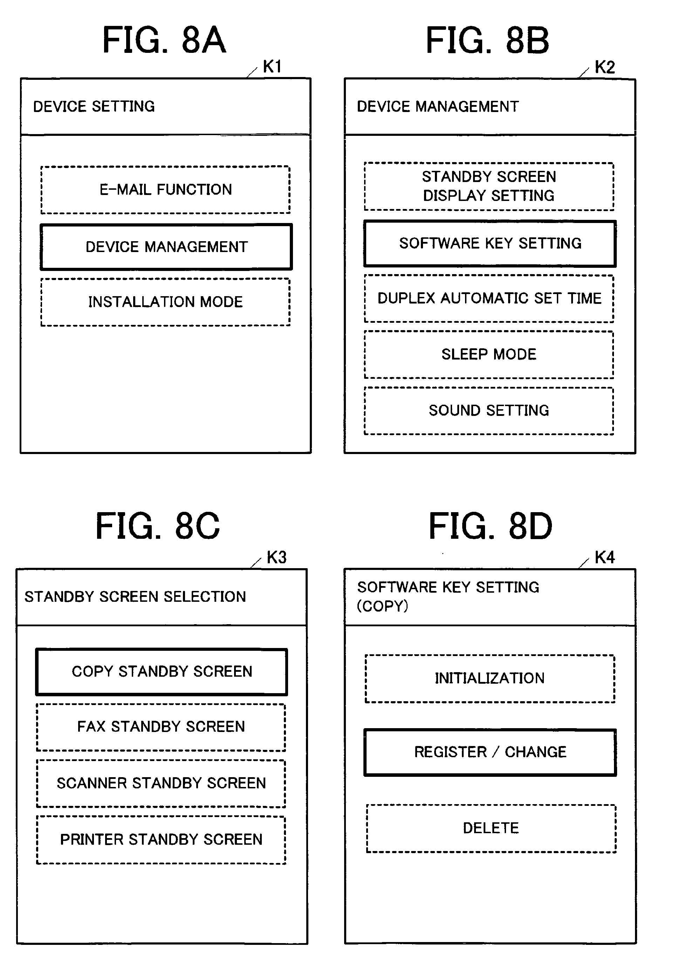

When a prescribed user operation is performed for calling a device setting function from the copy menu screen Tc displayed at step S4 (more specifically, when an item displayed as "DEVICE SETTING" (in Fig. 7B, the function display item M6) is selected from the displayed copy menu screen Tc and the execution key is operated), the display unit 15 displays a device setting screen K1 (Fig. 8A) (step S5). The device setting screen K1 is a screen for the user to select a desired setting process from various settings (i.e., "DEVICE MANAGEMENT" or "INSTALLATION MODE") of the digital MFP 1.

When a prescribed user operation is performed on the device setting screen K1 displayed at step S5 for calling a device management function (more specifically, when an item displayed as "DEVICE MANAGEMENT" is selected from the displayed device setting screen K1 and the execution key is operated), the display unit 15 displays a device management screen K2 (Fig. 8B) (step S6). The device management screen K2 is a screen for the user to select a desired setting process from various settings (i.e., a "SOFTWARE KEY SETTING", and a "STANDBY SCREEN DISPLAY SETTING") regarding a management status of the digital MFP 1.

When the user instructs to execute a software key setting process from the device management screen K2 displayed at step S6 (more specifically, when an item displayed as "SOFTWARE KEY SETTING" is selected from the displayed device management screen K2 and the execution key is operated), the display unit 15 displays a standby screen selection screen K3 (Fig. 8C) (step S7). The standby screen selection screen K3 is a screen for the user to select a standby screen, in which a software key which the user desires to set is arranged, from various standby screens for carrying out a software key setting (i.e., a copy standby screen, a fax standby screen, a scanner standby screen, or a printer standby screen).

Next, a determination is carried out as to whether or not the copy standby screen Sc has been selected from the standby screen selection screen K3 displayed at step S7 (more specifically, whether or not an item displayed as a "COPY STANDBY SCREEN" has been selected and the execution key has been operated) (step S8).

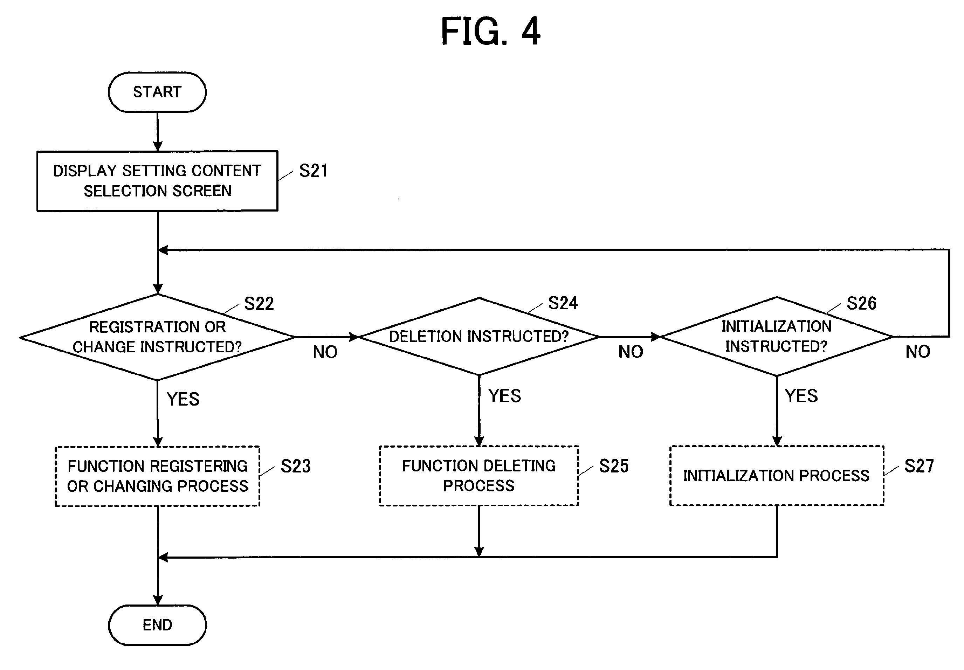

When a determination is made at step S8 that the copy standby screen Sc has been selected, a setting process of the software key P in the copy standby screen Sc is carried out (step S9). Further, a specific process executed as step S9 will be described later in detail (refer to Fig. 4).

When a determination is made at step S8 that the copy standby screen Sc has not been selected, a determination is carried out as to whether or not a fax standby screen has been selected (step S10). When a determination is made at step S10 that the fax standby screen has been selected, a setting process of the software key P in the fax standby screen is carried out (step S11). Further, the specific process executed as step S11 is the same as the process executed as step S9.

When a determination is made at step S10 that a fax standby screen has not been selected, a determination is carried out as to whether or not a scanner standby screen has been selected (step S12). When a determination is made at step S12 that the scanner standby screen has been selected, a setting process of the software key P in the scanner standby screen is carried out (step S13). Further, the specific process executed as step S13 is the same as the process executed as step S9.

When a determination is made at step S12 that the scanner standby screen has not been selected, a determination is carried out as to whether or not a printer standby screen has been selected (step S14). When a determination is made at step S14 that the printer standby screen has been selected, a setting process of the software key P in the printer standby screen is carried out (step S15). Further, the specific process executed as step S15 is the same as the process executed as step S9.

When a determination is made at step S14 that the printer standby screen has not been selected, the process returns to step S8 again.

(3.2 Setting Process Operation of Software Key) Fig. 4 is a flowchart illustrating a setting process operation of the software key P in the copy standby screen Sc (i.e., a process operation executed as step S9 of Fig. 3). Unless explicitly stated in the following description, the following operation is carried out automatically under the control of the control unit 11. The same description applies also to each process operation executed as step S11, S13, and S15 of Fig. 3 (i.e., a setting process operation of the software key P in each of the fax standby screen, the scanner standby screen, and the printer standby screen).

First, the display unit 15 displays a setting content selection screen K4 (Fig. 8D) (step S21). The setting content selection screen K4 is a screen for the user to select a desired processing type from processing types of the software key setting (i.e., "INITIALIZATION" of the software key, "REGISTER" of a function or "CHANGE" of a registered function with respect to the software key, or "DELETE" of the software key).

Next, a determination is carried out as to whether or not a registering or a changing of a function (a registration process of a function or a changing process of a registered function) has been selected as the processing type of the setting of the software key from the setting content selection screen K4 displayed at step S21 (more specifically, whether or not an item displayed as "REGISTER/CHANGE" has been selected and the execution key has been operated) (step S22).

When a determination is made at step S22 that the registering or the changing of the function has been selected, the registration process of a function or the changing process of the registered function is carried out with respect to the software key P (step S23). Further, a detailed description will be made later regarding a specific process carried out as step S23 (refer to Fig. 5).

When a determination is made at step S22 that the registering or the changing of the function has not been selected, next, a determination is carried out as to whether or not a deletion of the software key has been selected as the processing type of the setting of the software key (more specifically, whether or not an item displayed as "DELETE" has been selected and the execution key has been operated) (step S24).

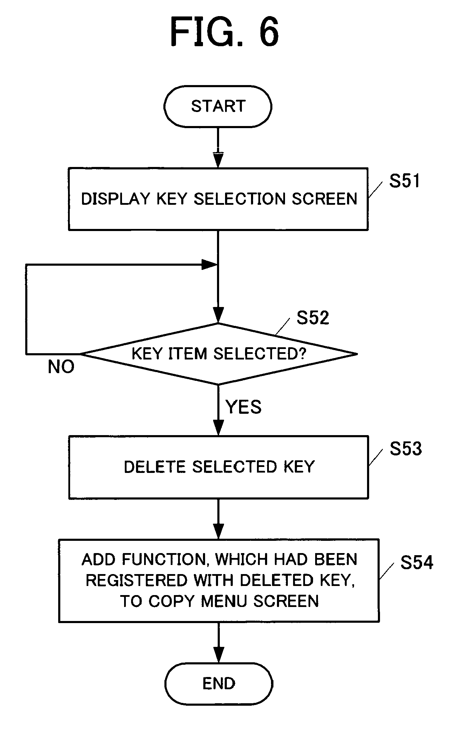

When a determination is made at step S24 that the deletion of the software key has been selected, a deletion process of the software key P is carried out (step S25). Further, a detailed description will be made later regarding a specific process carried out as step S25 (refer to Fig. 6).

When a determination is made at step S24 that the deletion of the software key has not been selected, a determination is carried out as to whether or not an initialization of the software key has been selected as the processing type of the setting of the software key (more specifically, whether or not an item displayed as "INITIALIZATION" has been selected and the execution key has been operated) (step S26).

When a determination is made at step S26 that the initialization of the software key has been selected, an initialization process of the software key P is carried out (step S27). At step S27, the software key P on the copy standby screen Sc is initialized into a setting status previously stored as a default. That is, a prescribed number of software keys P registered with a preset prescribed function are arranged in a prescribed order on the copy standby screen Sc.

(Registering of Function, and Changing of Registered Function) Fig. 5 is a flowchart illustrating a process operation carried out when registering a function or changing a registered function with respect to the software key P on the copy standby screen Sc (i.e., a process operation carried out as step S23 of Fig. 4). Unless explicitly stated in the following description, the following operation is carried out automatically under the control of the control unit 11.

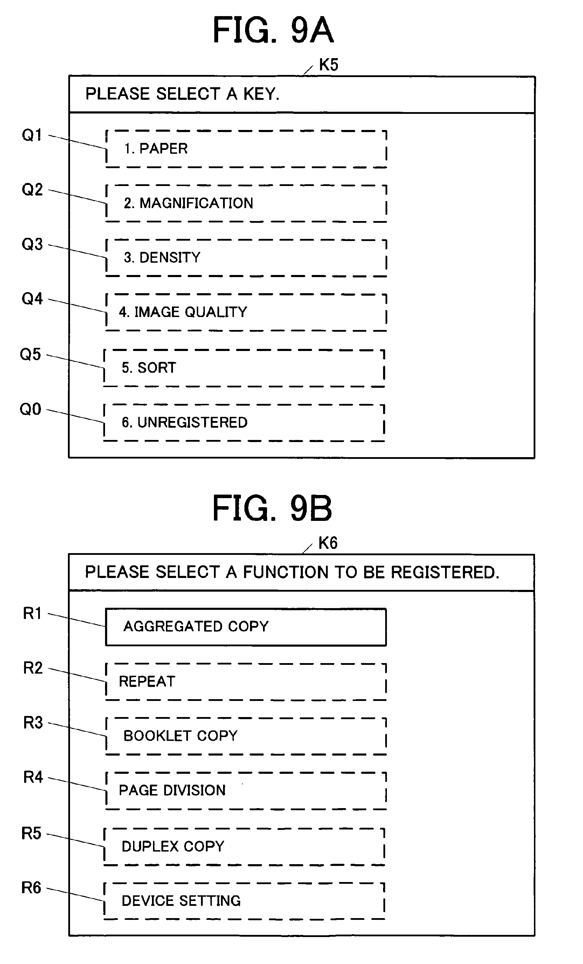

First, the display unit 15 displays a key selection screen K5 (Fig. 9A) (step S31). The key selection screen K5 is a screen for the user to select whether to execute either the registration process of a function or the changing process of the registered function with respect to the software key P, and when executing the changing process, whether to change a registered function of which one of the software keys P on the copy standby screen Sc.

For example, when the software keys P as illustrated in Fig. 7A are arranged on the copy standby screen Sc, the key selection screen K5 displays a list of "key items Q1 through Q5" corresponding to each of the software keys P1 through P5. In each of the key items Q1 through Q5, a name of the function displayed within a corresponding software key P (i.e., a name of the function registered with the software key P) is displayed. The user operates the ten-key numeric pad or the like to select one of the key items Q1 through Q5 displayed on the key selection screen K5. Then, the user operates a prescribed execution key (not illustrated) to execute the changing process of the function registered with the software key P corresponding to the selected key item Q. For example, when the user selects the key item Q2, the user can change the function registered with the software key P2 corresponding to the key item Q2 from a "copy magnification setting function" into any other function.

The key selection screen K5 also displays a key item Q0 in addition to the key items Q1 through Q5. "UNREGISTERED" is displayed in the key item Q0. The user operates the ten-key numeric pad or the like to select the key item Q0, and operates the prescribed execution key (not illustrated) to execute the registration process of the function with respect to the software key P. Further, the key item Q0 may be considered as a key item corresponding to the software key P0. In the following, unless explicitly stated in the following description to distinguish each key item, the key items will be referred simply as a "key item Q".

Next, a determination is carried out as to whether or not one of the key items Q has been selected from the key selection screen K5 displayed at step S31 and the execution key has been operated (step S32).

When a determination is made at step S32 that one of the key items Q has been selected, a determination is carried out as to whether or not the selected key item Q is the key item Q0 displayed as "UNREGISTERED" (i.e., a key item for executing a registration process of a function with respect to the software key P) (step S33).

When a determination is made at step S33 that the key item Q0 has been selected, or when the software key P0 has been pressed in the copy standby screen Sc (step S2: YES), the registration process of a function with respect to the software key P is executed (steps S34 through S37). That is, a software key P registered with a desired function of the user is newly generated in the copy standby screen Sc.

First, the display unit 15 displays a registering function selection screen K6 (Fig. 9B) (step S34). The registering function selection screen K6 is a screen for the user to select a type of the function to be registered.

That is, in the registering function selection screen K6, functions which can be registered in the copy standby screen Sc (i.e., among functions primarily relating to the copy process among the various functions of the digital MFP 1, functions excluding the functions registered with the software keys P in the copy standby screen Sc), are displayed as "function items R". That is, the registering function selection screen K6 displays a list of functions which can currently be activated only from the menu screen and not from the software keys P.

For example, when the copy standby screen Sc displays the software keys P as illustrated in Fig. 7A, the registering function selection screen K6 displays a list of "function items R1 through R6" corresponding to functions other than the functions already registered with the software keys P. A name of a corresponding function is displayed within each of the function items R1 through R6.

The user operates the ten-key numeric pad or the like to select one of the function items R1 through R6 displayed on the registering function selection screen K6, and executes a prescribed execution key (not illustrated). Accordingly, the user can select a function to be registered with the newly generated software key P.

Next, a determination is carried out as to whether or not a function to be registered has been selected from the registering function selection screen K6 displayed at step S34 (step S35).

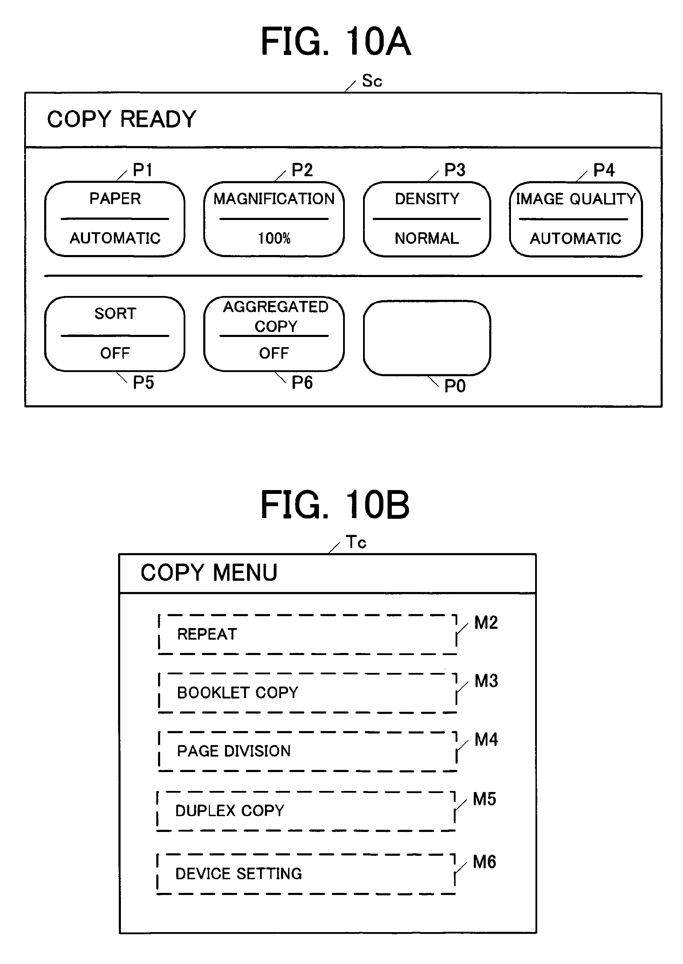

When a determination is made that a function to be registered has been selected at step S35, a new software key P registered with the selected function is generated (step S36). More specifically, a new software key P to be set in the copy standby screen Sc is generated, and the function selected at step S35 is registered with the newly generated software key P. For example, when a determination is made at step S35 that the function item R1 has been selected, a software key P6 registered with an "aggregated copy function", which is a function corresponding to the function item R1, is generated as the software key P to be displayed on the copy standby screen Sc (Fig. 10A). Further, the newly generated software key P6 is arranged in front of the software key P0 in the arrangement of the series of the software keys P arranged on the standby screen. That is, even when a new software key P is added, the software key P0 is always displayed at the end in the arrangement of the series of the software keys arranged within the standby screen.

Next, among the function display items M displayed on the copy menu screen Tc, the function display item M displaying the function selected at step S35 is deleted (step S37). For example, when the function item R1 corresponding to the "aggregated copy function" is selected at step S35, the function display item M1 displaying the selected function is deleted from the copy menu screen Tc (Fig. 10B).

When a determination is made at step S33 that the key item Q0 has not been selected, a changing process is executed for the function registered with the software key P (more specifically, any software key P, excluding the software key P0, among the software keys P on the copy standby screen Sc) (steps S38 through S42).

First, the display unit 15 displays the registering function selection screen K6 (Fig. 9B) (step S38). In this case, the registering function selection screen K6 functions as a screen for the user to select a type of a function to be newly registered in place of the function currently registered in the software key P corresponding to the key item Q selected at step S32.

Next, a determination is carried out as to whether or not a function to be newly registered in place of the currently registered function has been selected from the registering function selection screen K6 displayed at step S38 (step S39).

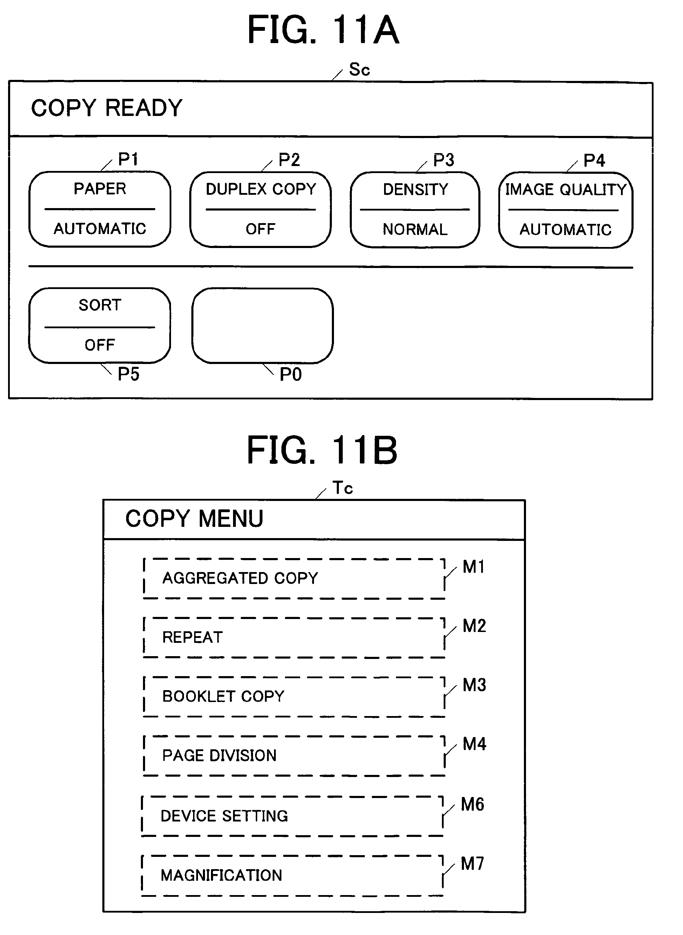

When a determination is made at step S39 that a function to be newly registered in place of the currently registered function has been selected, the selected function is registered with the software key P selected at step S32 (step S40). For example, when the key item Q2 ("MAGNIFICATION") is selected at step S32 and the function item R6 ("DUPLEX COPY") is selected at step S39, a duplex copy function is registered with the software key P2 corresponding to the key item Q2 in place of the copy magnification adjusting function. In addition, the display of the software key P2 changes from "MAGNIFICATION/100%" to "DUPLEX COPY/OFF" (Fig. 11A).

Next, among the function display items M displayed on the copy menu screen Tc, the function display item M displaying the function selected at step S39 is deleted (step S41). In case of the above-described example, the function display item M5 displaying the function corresponding to the function item R5 selected at step S39 is deleted from the copy menu screen Tc (Fig. 11 B).

Next, as a function display item M to be displayed on the copy menu screen Tc, a function display item M displaying the function, which had been registered with the software key P selected at step S32 before the change has been made, is generated (step S42). In case of the above-described example, the copy menu screen Tc displays the function display item M7 displaying the function ("copy magnification adjusting function"), which had been registered with the software key P2 corresponding to the key item Q2 selected at step S32 before the changing process (Fig. 11 B).

(Deletion Process) Fig. 6 is a flowchart illustrating a process operation carried out when deleting a software key P from the copy standby screen Sc (i.e., a process operation carried out as step S25 of Fig. 4). Unless explicitly stated in the following description, the following operation is carried out automatically under the control of the control unit 11.

First, the display unit 15 displays the key selection screen K5 (Fig. 9A). The key selection screen K5 functions as a screen for the user to select a software key P to be deleted among the software keys P displayed on the copy standby screen Sc.

Next, a determination is carried out as to whether or not one of the key items Q has been selected from the key selection screen K5 displayed at step S51 and the execution key has been operated (step S52).

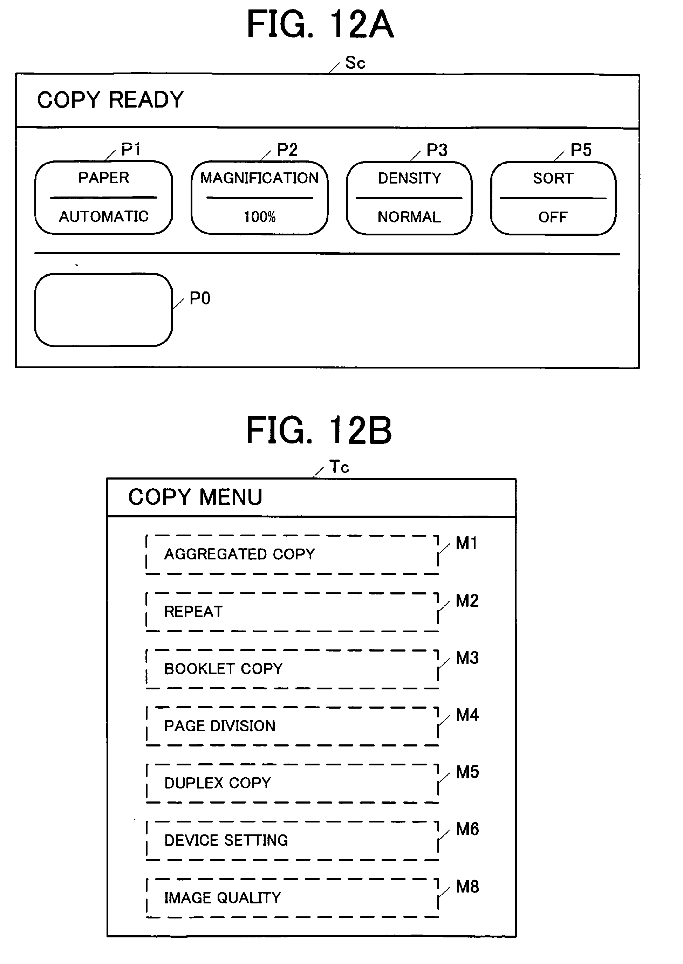

When a determination is made at step S52 that the key item Q has been selected, the software key P corresponding to the selected key item Q is deleted (step S53). For example, when a determination is made at step S52 that the key item Q4 ("IMAGE QUALITY") has been selected, the software key P4 corresponding to the key item Q4 is deleted from the copy standby screen Sc (Fig. 12A).

Next, as a function display item M to be displayed on the copy menu screen Tc, a function display item M displaying the function, which had been registered with the software key P corresponding to the key item Q selected at step S52, is generated (step S54). In case of the above-described example, the copy menu screen Tc displays the function display item M8 displaying a function ("copy image quality adjusting function"), which had been registered with the software key P4 corresponding to the key item Q4 selected at step S52 (Fig. 12B).

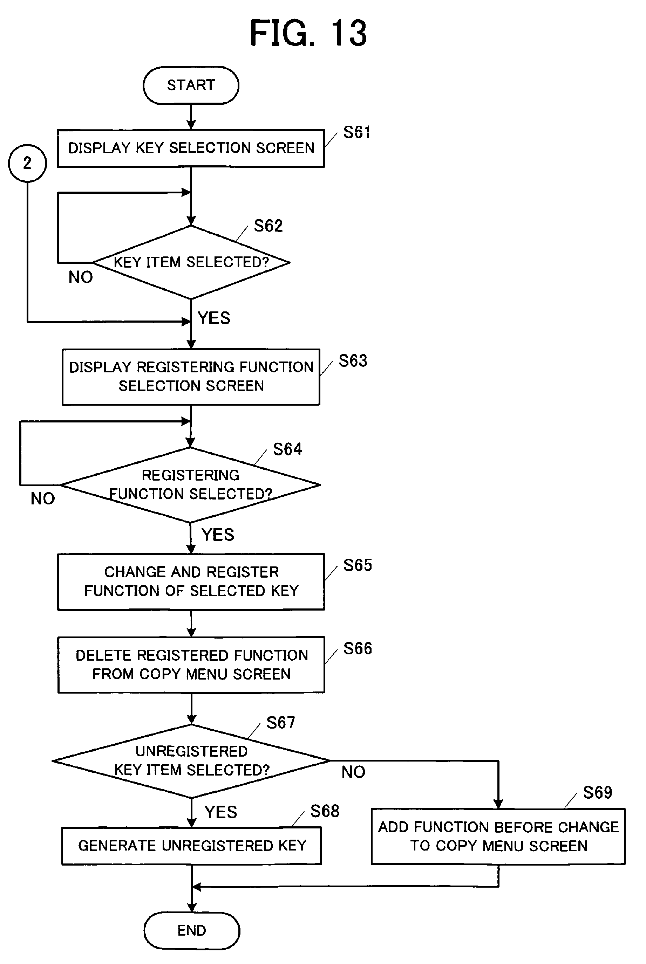

(3-3. Another Example of Setting Process Operation (Registering/Changing Process of Function) of Software Key) Fig. 13 is a flowchart illustrating a process operation carried out when registering a function and changing a registered function with respect to the software key P on the copy standby screen Sc (i.e., the process operation carried out as step S23 of Fig. 4) according to another example of the above-described preferred embodiment of the present invention.

The changing process operation described hereinafter is realized by the above-described digital MFP 1. In this example, the software key generating unit 212 is configured as a function unit for generating an unregistered software key (software key P0) in which any function may be registered. As to be described later, when a function is registered with an unregistered software key, the software key generating unit 212 generates a new unregistered software key. Unless explicitly stated in the following description, the following operation is carried out automatically under the control of the control unit 11.

First, the display unit 15 displays the key selection screen K5 (Fig. 9A) (step S61).

The key selection screen K5 functions as a screen for the user to select one software key P on the copy standby screen Sc for executing the changing process of the registered function.

For example, when the software keys P are arranged on the copy standby screen Sc as illustrated in Fig. 7A, the key selection screen K5 displays a list of "key items Q0 through Q5" corresponding to each of the software keys P0 through P5. A name of a function displayed within a corresponding software key P (i.e., a name of a function registered with such a software key P) is displayed within each of the key items Q1 through Q5. "UNREGISTERED" is displayed within the key item Q0 corresponding to a "blank" software key P0.

The user operates the ten-key numeric pad or the like to select one of the key items Q0 through Q5 displayed on the key selection screen K5, and operates a prescribed execution key (not illustrated). Accordingly, the user can execute a changing process for changing the function registered with the software key P corresponding to the selected key item Q. The user operates the ten-key numeric pad or the like to select the key item Q0, and operates a prescribed execution key (not illustrated). Accordingly, the user can register a desired function with the software key P0 corresponding to the key item Q0.

Next, a determination is carried out as to whether or not any one of the key items Q has been selected from the key selection screen K5 displayed at step S61 and the execution key has been operated (step S62).

When a determination is made at step S62 that the key item Q has been selected, the display unit 15 displays the registering function selection screen K6 (Fig. 9B) (step S63). The registering function selection screen K6 functions as a screen for the user to select a type of a function, which the user desires to be newly registered with respect to the software key P corresponding to the key item Q selected at step S52 by the user.

Next, a determination is carried out as to whether or not a function to be newly registered has been selected from the registering function selection screen K6 displayed at step S63 (step S64).

When a determination is made at step S64 that a function to be newly registered has been selected, the selected function is registered with the software key P selected at step S62 (step S65). For example, when the key item Q0 ("UNREGISTERED") is selected at step S63 and the function item R1 ("AGGREGATED COPY") is selected at step S64, an "aggregated copy function" is registered with the software key P0 corresponding to the key item Q0, and the software key P0 is changed to be a software key P6. "AGGREGATED COPY/OFF" is displayed within the software key P6 (Fig. 10A).

Next, among the function display items M displayed on the copy menu screen Tc, the function display item M displaying the function selected at step S64 is deleted (step S66). In case of the above-described example, the function display item M1 displaying the function corresponding to the function item R1 selected at step S64 is deleted from the copy menu screen Tc (Fig. 10B).

Next, a determination is carried out as to whether or not the key item Q selected at step S62 is the key item Q0 (i.e., a key item corresponding to the software key P0) (step S67).

When a determination is made at step S67 that the key item Q0 has been selected, a blank software key P0 is generated as a software key to be displayed on the copy standby screen Sc (Fig. 10A) (step S68). Further, the generated software key P0 is arranged at the end of the arrangement of the series of the software keys P arranged within the standby screen.

When a determination is made at step S67 that the key item Q0 has not been selected, next, as a function display item M to be displayed on the copy menu screen Tc, a function display item M displaying the function, which had been registered with the software key P selected at step S62 before the changing process has been executed, is generated (step S69).

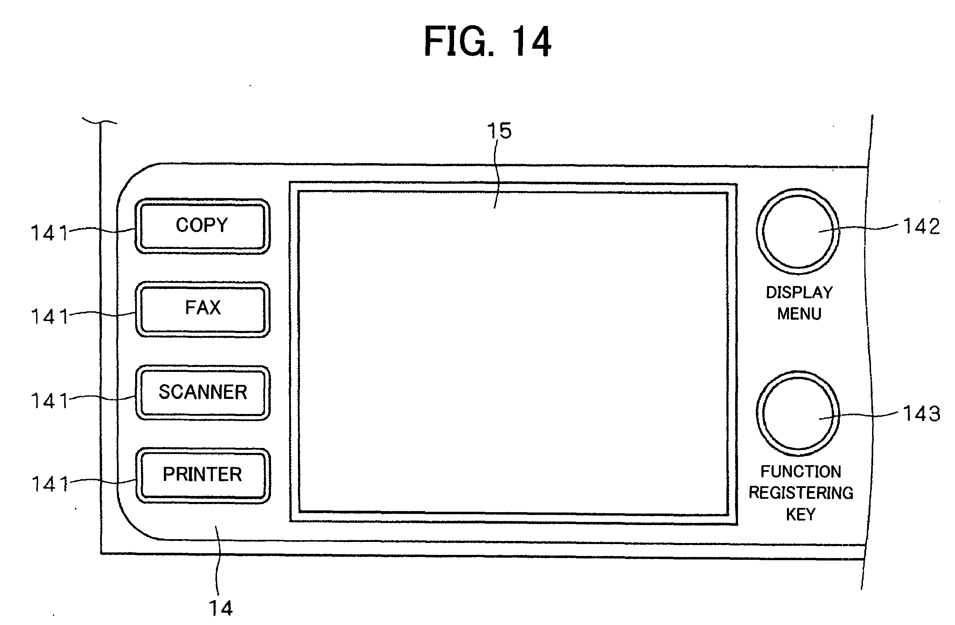

(4. Second Preferred Embodiment) Fig. 14 illustrates an example of a configuration of the display unit 15 and a portion of the operation unit 14 of the digital MFP 1 embedded with a function according to a second preferred embodiment of the present invention. In the following, a description will be made of aspects that are different from the description of the first preferred embodiment described above.

In the second preferred embodiment, the operation unit 14 includes a function registering key 143 in addition to the keys described in the first preferred embodiment (the function switching keys 141 and the menu key 142).

The function registering key 143 is a key having a same function as the software key P0 in the first preferred embodiment. That is, when the function registering key 143 is pressed, the digital MFP 1 starts a process for generating a new software key registered with a desired function of the user. More specifically, under a state in which the copy standby screen Sc is displayed on the display unit 15, when the user presses the function registering key 143, the digital MFP 1 starts a process for generating a new software key registered with a desired function of the user in the copy standby screen Sc in accordance with the operation performed by the user (processes of step S24 and onward in Fig. 5).

While the present invention has been described with respect to preferred embodiments thereof, it will be apparent to those skilled in the art that the disclosed invention may be modified in numerous ways and may assume many embodiments other than those specifically set out and described above. Accordingly, the appended claims are intended to cover all modifications of the present invention that fall within the true spirit and scope of the present invention.

## Claims

1. An electronic device comprising:
an entering means including software keys registered with functions of the electronic device;
a function registering means for registering a function with respect to the software keys; and
a registering function accepting means for accepting a function selection instruction from a user;
**characterized in that** the entering means includes an unregistered software key in which a function is not registered, and
the function registering means registers the function accepted by the registering function accepting means with respect to the unregistered software key.

2. The electronic device according to claim 1, **characterized by** further comprising an unregistered software key generating means for generating a new software key, **characterized in that** when the function registering means registers the function with respect to the existing unregistered software key, the unregistered software key generating means generates a new software key as an unregistered software key.

3. The electronic device according to claim 1, **characterized by** further comprising a function display control means for controlling to display a function registered with a software key for each of the software keys, **characterized in that** the function display control means does not display a function on the unregistered software key.

4. The electronic device according to claim 1, **characterized in that** the unregistered software key is arranged at an end of an arrangement of the software keys of the entering means.

5. The electronic device according to claim 1, **characterized in that** the entering means includes a function registration execution instruction entry key for entering an instruction to register a function with respect to the unregistered software key, and when the user operates the function registration execution instruction entry key, the function registering means registers a function with respect to the unregistered software key.

6. The electronic device according to claim 5, **characterized in that** the function registration execution instruction entry key is the unregistered software key.

7. The electronic device according to claim 1, **characterized by** comprising:
a function list display control means for selectably displaying on a displaying means, a list of functions of the electronic device that are not registered with the software keys;
a function selection accepting means for accepting a selection of one function from the list of the selectably displayed functions;
a function activating means for activating the function accepted by the function selection accepting means; and
a display item deleting means for deleting a registered function from the list of the functions when the function registering means registers the function with respect to the unregistered software key.

8. An electronic device comprising:
an entering means including software keys registered with functions of the electronic device;
a function registering means registering means for registering a function with respect to the software keys;
a software key generating means for generating a new software key; and
a registering function accepting means for accepting a function selection instruction from a user;
**characterized in that** when the software key generating means generates the new software key, the function registering means registers the function accepted by the registering function accepting means with respect to the new software key.

9. The electronic device according to claim 8, **characterized in that** the entering means includes a software key generation instruction entry key for entering an instruction to generate the new software key, and
when the user operates the software key generation instruction entry key, the software key generating means generates the new software key.

10. The electronic device according to claim 9, **characterized in that** the software key generation instruction entry key is a software key.

11. The electronic device according to claim 10, **characterized by** further comprising a function display control means for displaying a function registered with a software key for each of the software keys, **characterized in that** the function display control means does not display a function with respect to the software key generation instruction entry key.

12. The electronic device according to claim 10, **characterized in that** the software key generation instruction entry key is arranged at an end of an arrangement of the software keys of the entering means.

13. The electronic device according to claim 8, **characterized by** further comprising:
a function list display control means for selectably displaying, on a displaying means, a list of functions of the electronic device that are not registered with the software keys;
a function selection means for accepting a selection of one function from the list of the selectably displayed functions;
an activating means for activating the function accepted by the function selection accepting means; and
a display item displaying means for deleting a registered function from the list of the functions when the function registering means registers the function with respect to the new software key.
